# EUROPEAN PATENT APPLICATION

(11) **EP 4 645 134 A1**
(43) Date of publication of application: **05.11.2025**
(21) Application number: 25173606.2
(22) Date of filing: 30.04.2025
(51) Int. Cl.: G06F 21/55, G06F 21/57, H04L 9/40

(54) **TRUST MAPPING SOLUTION FOR MODELING SYSTEMIC RISK**

(30) Priority: 30.04.2024 US 202463640282 P; 29.04.2025 US 202519193010
(71) Applicant: Axiom Technologies LLC, Reston, Virginia 20191 (US)
(72) Inventor: DOHERTY, Maxwell, Reston, VA, 20191 (US); HARICHANDRAN, Vikram Sandhu, Reston, VA, 20191 (US)
(74) Representative: J A Kemp LLP

(57) **Abstract**

A method of generating a mapping of trust relationships between pairs of components and analyzing security risks of a computer system is provided and includes classifying, labeling, and grouping components of the computer system and generating the mapping of the trust relationships between pairs of components by designating a trustor and a trustee for each pair and by identifying a method associated with the trust relationship for each pair of components. Security risks of the computer system are analyzed by performing at least one of: patching a root cause of a security risk; modifying a policy of the computer system to mitigate a security risk; modifying a design of the computer system to mitigate a security risk; shifting a security risk from one component to another; and monitoring a root cause of a security risk.

## Description

### CROSS-REFERENCE TO RELATED APPLICATIONS

This application claims the benefit of U.S. Provisional Application No. 63/640,282, filed on April 30, 2024. The entire disclosure of the above application is incorporated herein by reference.

### FIELD

The present disclosure relates to modeling systemic risk for computer systems, architecture, and software, and, in particular, to trust mapping solutions for modeling systemic risk for computer systems, architecture, and software.

### BACKGROUND

This section provides background information related to the present disclosure.

Current products and technology do not provide trust mapping. Tangential work has been explored in ontology, data-flow diagrams, architectural depictions, graph tools, and research targeting finding weaknesses in current protocols, but none of these are directed to solving the two key issues outlined below.

### Documentation Issues

Documentation of how a product/technology's system components (also referred to as a solution) are interconnected typically does not follow any standard. Each company determines the labels, e.g., terminology and/or description of concepts, data, entities, and their properties and relationships, to use and omit when showing customers the features of their products. This is largely in an attempt to optimize buy-in from potential customers by using industry buzzwords and marketing jargon, but also because of lacking standards, ground truth, and consensus. Typical examples of documentation include graphs of network nodes, lists of dependencies, and diagrams with boxes or dotted lines separating subnets and demilitarized zones (DMZs).

On top of labels not aligning, documentation of solutions mixes various levels of abstraction to hide unnecessary information that could clutter customer comprehension of features or create an obstacle to buy-in. An example of this is a description or diagram that uses labels such as "server," "credential," and/or "web browser extension." Note that the concept of a server may be a location for hardware or hardware itself or refer to an arbitrary virtual environment hosted in some cloud somewhere unspecified. A credential could have various formats. A web extension must exist within a web browser, but this is often left out of the documentation and assumed to be general knowledge of industry professionals, i.e. assumed knowledge.

Although the clarity of such documentation may be lacking, it is an inevitable issue for human comprehension. Humans cannot comprehend nor visualize mentally hundreds of labels and their levels of abstraction. Thus, we must clarify when talking about documentation that there is marketing documentation and technical documentation. Marketing documentation is acceptable for including assumed knowledge and is focused on human understanding, but technical documentation should not focus on these in order to:
- better understand solutions upon selection to avoid improper problem-solution alignment where humans inaccurately believe they are selecting the appropriate solution,
   o because of the above utilize expert time more efficiently (less time required to learn *ad hoc* labels),
- implement and configure solutions properly.

With respect to the above bullets, current technical documentation is much closer to marketing documentation than it should be, asserting abstract problem-solution statements. Herein lies the key psychological decision made by humans that has the most risk of improper problem-solution alignment. When contrasting solutions for defense it is not an apples-to-apples comparison - but it should be to optimize alignment.

This would avoid misunderstanding nuances (when the labels accurately describe the two circumstances at the same level of abstraction) or it may be impossible to compare the two circumstances effectively (when the language describes the two circumstances at different levels).

To summarize the status quo, the ad hoc nature of documenting labels and levels of abstraction in solutions combined with assumed knowledge and technical documentation that resembles marketing documentation is improper problem-solution alignment.

### Systemic Risk Issue

A subsequent issue of the documentation issue described above is poor design during the development of solutions and misconfiguration during setup/integration of solutions. Multiple solutions used in an operational environment may, for example, require coordination of authentication and authorization policies with multiple components to be optimally secure. Specifically, the second major issue with the status quo (after improper problem-solution alignment) is systemic risk, a set of unclear (forgotten, assumed/neglected, nondescript, or insufficiently described) components of a solution, or set of solutions, that results in the propagation of risk (defensive weaknesses, including poor design, increased attack surface, and vulnerabilities) across an architecture, single solution, or operational system (environment comprising of a set of solutions).

Currently, the best practices in cybersecurity defense involve solely addressing the branches of the risk propagation tree(s) to avoid the end result of breaches (defensive weaknesses that lead to unintentional or malicious compromise). An example of this is continuous integration/deployment (CI/CD) and development, security, and operations (DevSecOps) scanning practices that ensure security tests are past and code is cryptographically (re)signed. DevSecOps is an augmentation of software development and IT operations (DevOps) to allow for security practices to be integrated into the DevOps approach. Contrary to a traditional centralized security team model, each delivery team is empowered to factor in the correct security controls into their software delivery. Security practices and testing are performed earlier in the development lifecycle. Security is tested in three main areas: static, software composition, and dynamic.

However, the roots of risk propagation trees often remain unclear (forgotten, assumed/neglected, nondescript, or insufficiently described).

### SUMMARY

This section provides a general summary of the disclosure, and is not a comprehensive disclosure of its full scope or all of its features.

In some aspects, the techniques of the present disclosure relate to a method including: classifying, labeling, and grouping a plurality of components of a computer system; generating a mapping of trust relationships between a plurality of pairs of components from the plurality of components by designating a first component of each pair as a trustor and a second component of each pair as a trustee and by identifying a method associated with the trust relationship for each pair of components, a trust relationship for at least one pair of components being a verification relationship; and analyzing security risks of the computer system and performing at least one of the following based on the analysis of the security risks: patching a root cause of at least one security risk based on the mapping of the trust relationships; modifying a policy of the computer system to mitigate the at least one security risk; modifying a design of the computer system to mitigate the at least one security risk; modifying the computer system to shift the at least one security risk from one component of the computer system to another component of the computer system; and monitoring a root cause of the at least one security risk.

In other features, the method further includes redacting and encapsulating information within the generated mapping of trust relationships prior to exporting the mapping of the trust relationships.

In other features, the method further includes the computer system includes a privileged access manager.

In other features, the computer system includes at least one of a GitLab continuous integration and continuous deployment (CI/CD) pipeline, an application programming interface (API) software development kit (SDK), Git Repositories, and a software product.

In other features, the computer system includes at least one of a security analyst workstation, a security analyst authentication server, and a security information and event management (SIEM) server.

In other features, the computer system includes at least one of a developer computer and a cloud development environment.

In other features, the computer system includes at least one of a GitHub-Hosted JavaScript Library, Python dependencies, and a product website.

In other features, the method associated with the trust relationship for each pair of components includes one of: a remote desktop protocol method, a secure sockets layer (SSL) / transport layer security (TLS) method, a secure shell (SSH) / multi-factor authentication (MFA) method, a temporary token method, a X.509 certificate method, a handshake method, and an SHA-256 hash method.

In other features, the mapping of the trust relationships is generated as a visualization of components stored in at least one computer file.

In other features, the mapping of the trust relationships is generated as a spreadsheet.

In other features, the method further includes exporting the mapping of the trust relationships to a user.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The drawings described herein are for illustrative purposes only of selected embodiments and not all possible implementations and are not intended to limit the scope of the present disclosure.
FIG. 1 illustrates a flowchart with the high-level steps performed to produce a trust mapping in accordance with the present disclosure.
FIG. 2A illustrates a block diagram of a computer system, architecture, and environment with labeling of components in accordance with the present disclosure.

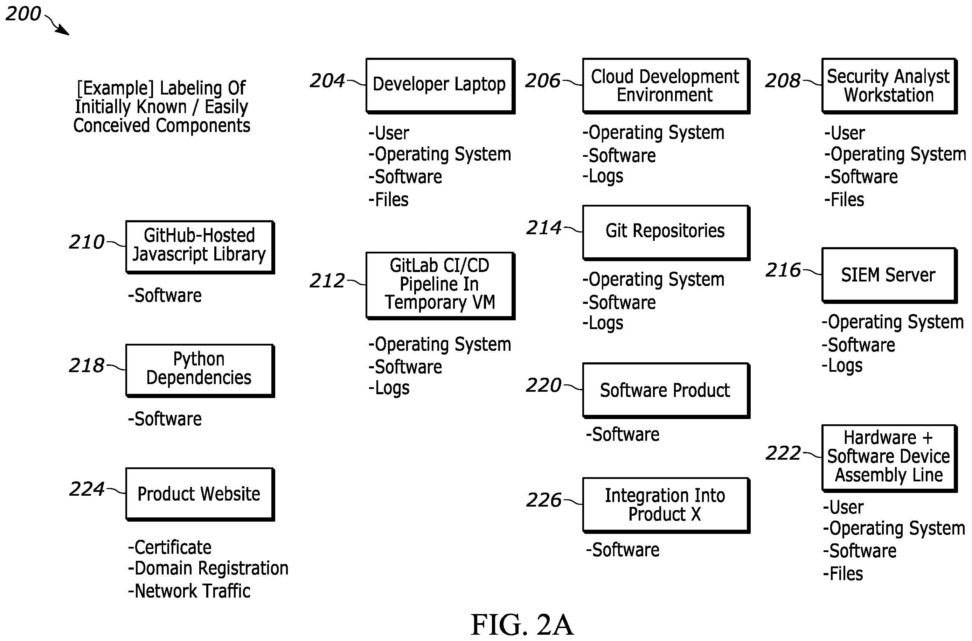

FIG. 2A illustrates a block diagram of the computer system, architecture, and environment with grouping/clustering of components in accordance with the present disclosure.

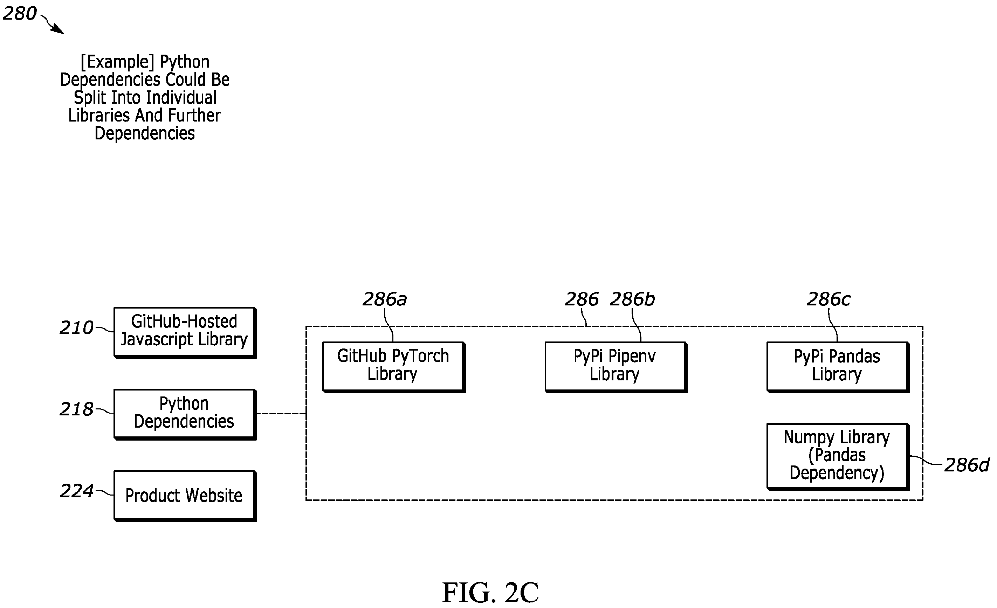

FIG. 2C illustrates a block diagram illustrating further dependencies/splitting of a component of the computer system, architecture, and environment in accordance with the present disclosure.

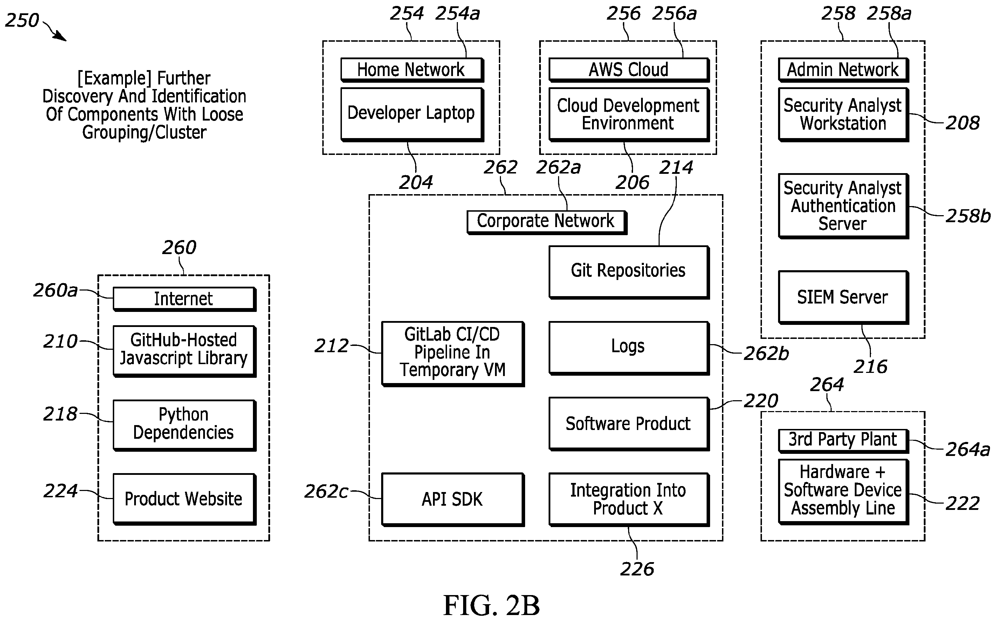

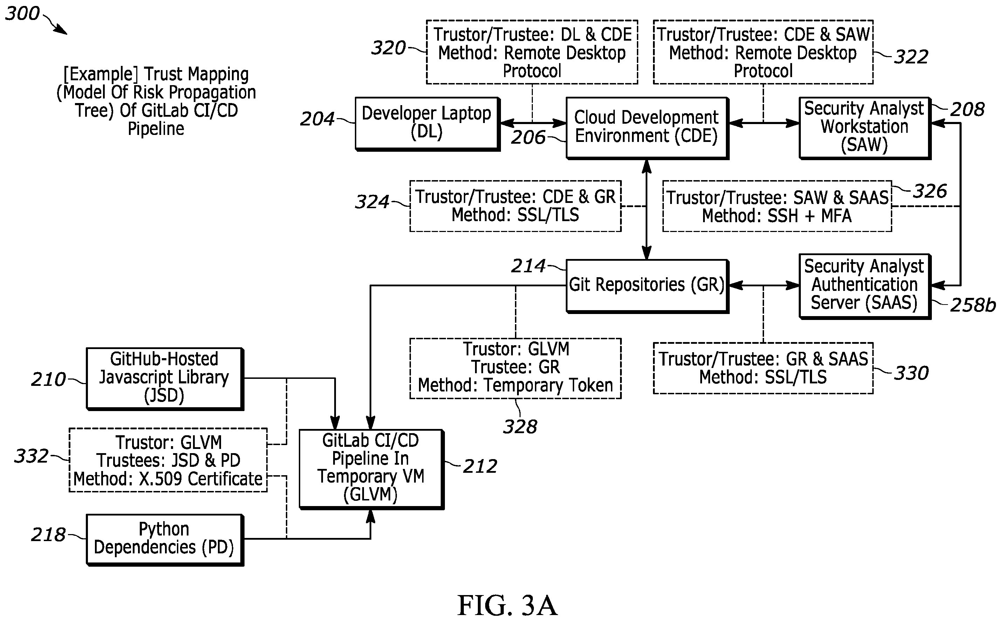

FIG. 3A illustrates a trust mapping, or model of risk propagation tree, of a GitLab CI/CD Pipeline, such as the GitLab CI/CD Pipeline shown in FIGs. 2A and 2B in accordance with the present disclosure.
FIG. 2C illustrates an example of splitting Python dependencies into individual libraries and further dependencies in accordance with the present disclosure.
FIG. 3A illustrates a trust mapping, or model of risk propagation tree, of the GitLab CI/CD Pipeline shown in FIGs. 2A and 2B in accordance with the present disclosure.

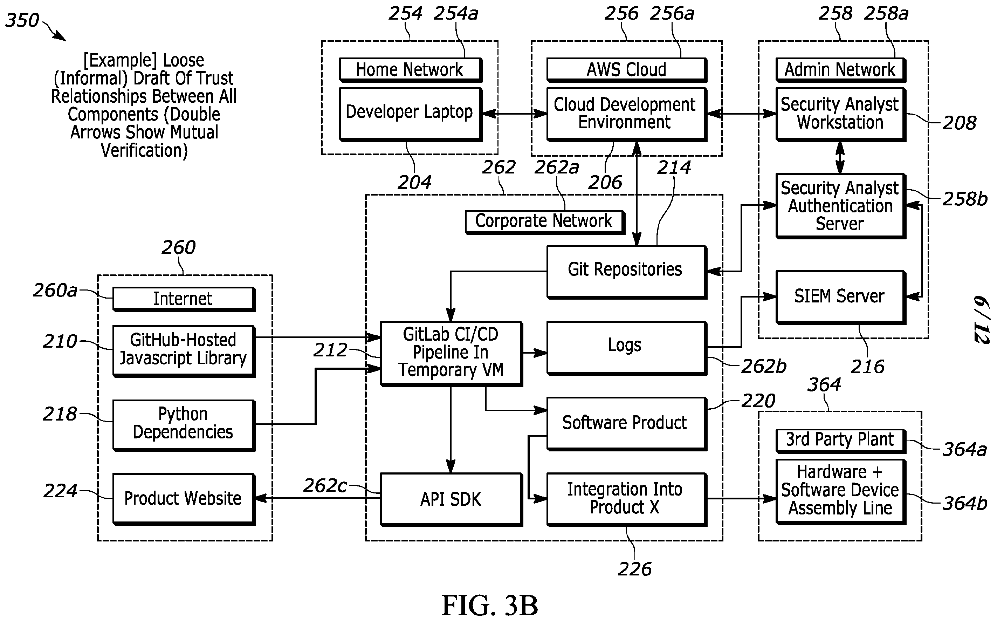

FIG. 3B illustrates a draft of trust relationships between all components of the computer system, architecture, and environment illustrated in FIG. 2B, with verification relationships illustrated by single or double-headed arrows in accordance with the present disclosure.

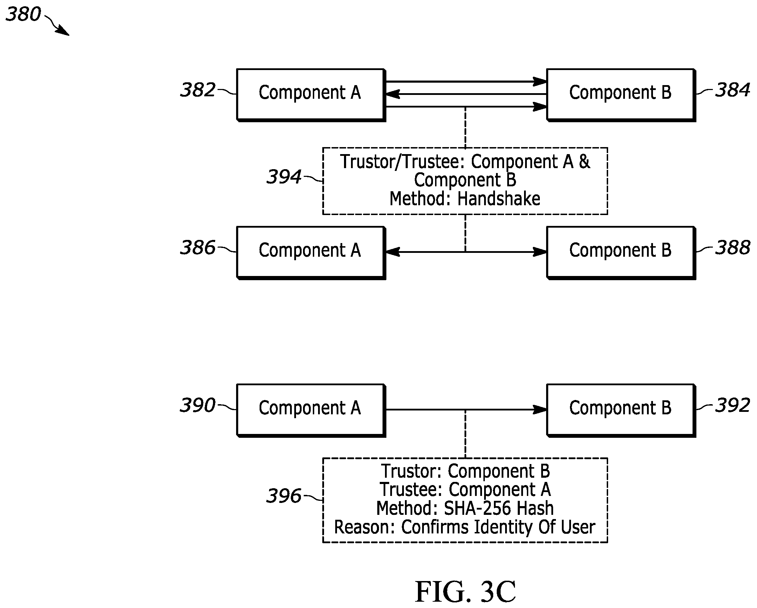

FIG. 3C illustrates Trustor/Trustee relationships and methods are illustrated with verification arrows illustrating mutual verification with double-headed arrows and unilateral verification with single-headed arrows for combinations of different components A and B in accordance with the present disclosure.

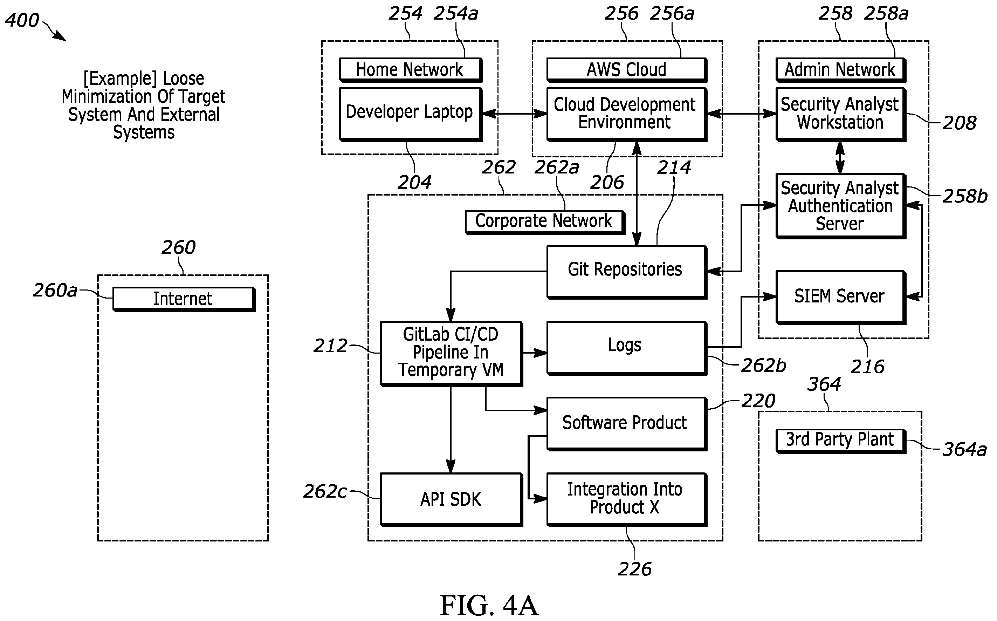

FIG. 4A illustrates the computer system, architecture, and environment after redaction in accordance with the present disclosure.

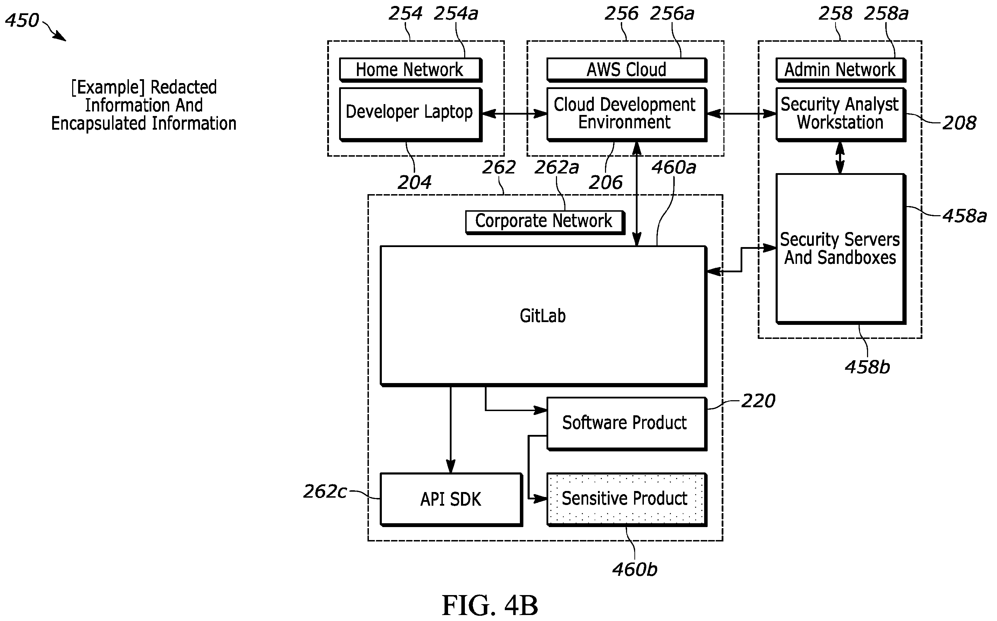

FIG. 4B illustrates the computer system, architecture, and environment after redaction and encapsulation in accordance with the present disclosure.

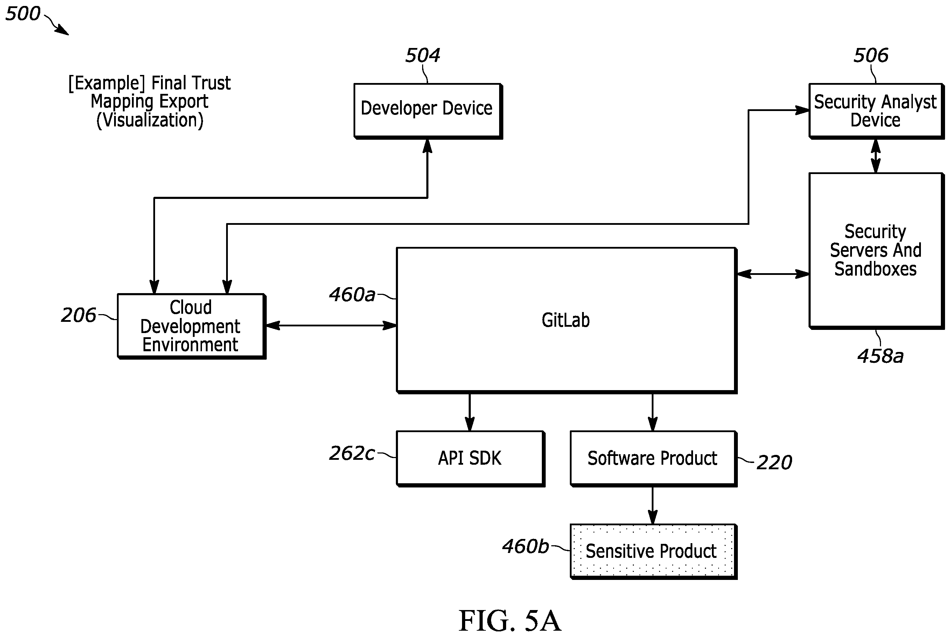

FIG. 5A illustrates a final trust mapping generated in a visualization format for exporting in accordance with the present disclosure.

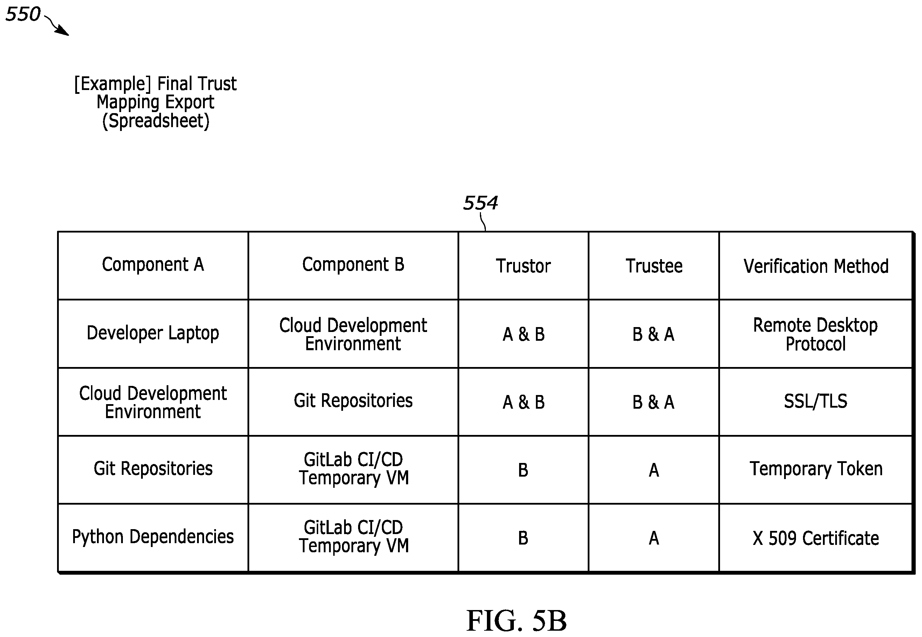

FIG. 5B illustrates a final trust mapping generated in a spreadsheet format for exporting in accordance with the present disclosure.

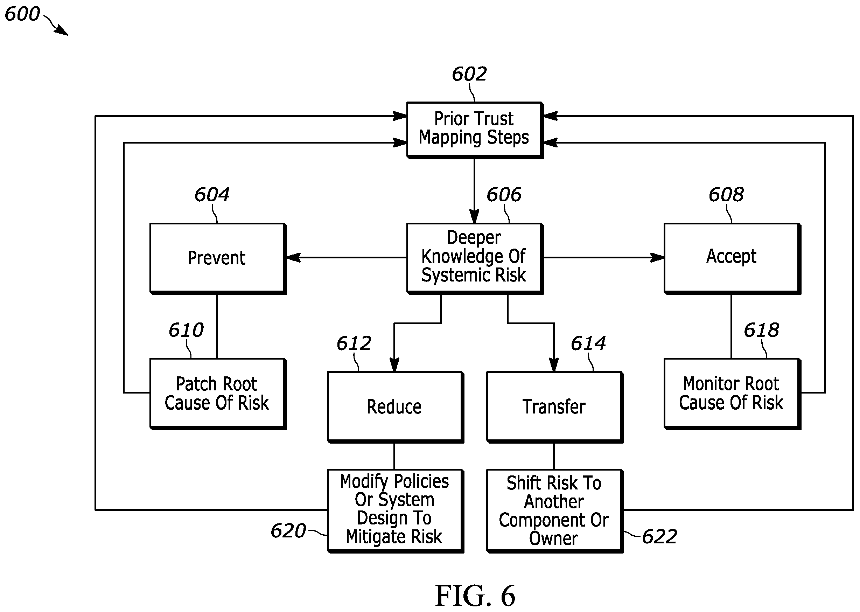

FIG. 6 illustrates a flow chart for the analysis, revising solutions, and patching root cause of risk in accordance with the present disclosure.

Corresponding reference numerals indicate corresponding parts throughout the several views of the drawings.

### DETAILED DESCRIPTION

Example embodiments will now be described more fully with reference to the accompanying drawings.

### Trust and Trust Mapping

The present disclosure provides a standardized approach for representing the trust that is innately interwoven with systemic risk so that the roots of risk propagation trees can be addressed more effectively for evaluation and analysis of computer systems, architecture, and software. Within this context trust is the relationship between two components, wherein one component, the trustor, performs a verification of the other component, the trustee. When both components perform a verification of each other both components have trustor and trustee designations.

In the present disclosure, verification refers to a method of formal verification. The National Institute of Standards and Technology (NIST) defines verification as a systematic process that uses mathematical reasoning and mathematical proofs to verify that the system satisfies its desired properties, behavior, or specification. There is a myriad of methods of formal verification, including the topical software verification and validation (V&V) subset. However, this disclosure refers to verification as a semantic and/or mathematical model that uses labeling for understanding the trust between components of a system, and the trust-based decisions both humans and machines make from these understandings. The following section illustrates how these labels can be annotated.

The term "trust mapping" refers to a model of a risk propagation tree of an architecture, single solution, or operational system that labels the trust between components. This representation may be in the form of a visual graph/tree diagram for human comprehension or serialized into source code (both machine-readable and human-readable).

Common practices for the source code approach involve using standardized data transformation languages, formats, and tools, including ontology modeling languages. An applied ontology is the formal manner in which the representation or modeling of categories, properties, and relationships between concepts, data, and entities is encompassed, i.e. a manner to show properties of a subject area and how they are related. At a high-level, ontology refers to information science, but the present disclosure refers to ontology engineering, which is an applied ontology.

Both the visual and source code approaches involve first determining the content of the labels, a task that may be conducted via producing an ad hoc controlled vocabulary, i.e., a formally organized arrangement of terms that is indexed and searchable, or via an existing standard.

This disclosure is directed towards trust mapping, as defined above, as a specific type of modeling process that results in further understanding of the systemic risk, trust, and verification that exists in an architecture, single solution, or operational system, regardless of the approach and implementation taken to representation as well as the tools utilized to do so. The following sections outline this in further detail.

### Overview

Before conducting a trust mapping, any preexisting technical documentation of the computer architecture, single solution, or operational system components, with highest desirability being a human-drawn diagram or a file format that can be viewed in a software program, is obtained.

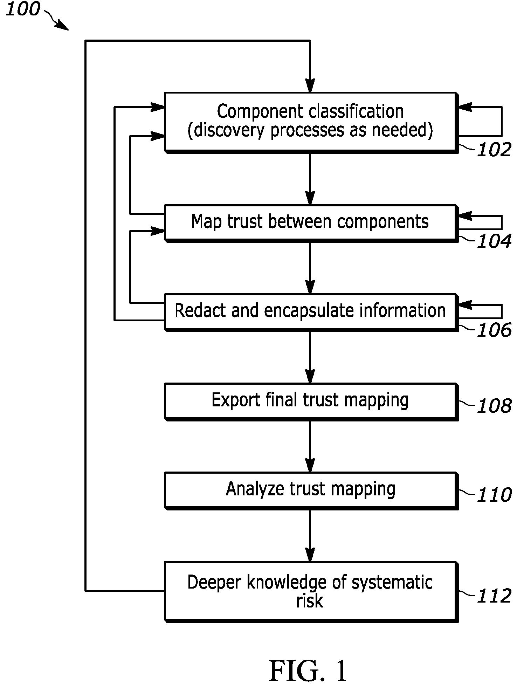

Once this is done, the following high-level phases are performed to produce a trust mapping. FIG. 1 illustrates a flowchart 100 with the high-level steps performed to produce a trust mapping. At 102, discovery processes are performed as needed to classify the system components of the existing schematic for the computer system, architecture, or software. At 104, the trust mapping between system components is performed. At 106, redaction and encapsulation of desired information is performed. At 108, exportation of the final trust mapping is performed. At 110, the analysis of the trust mapping is performed to draw conclusions and evaluate systemic risk.

Each of these phases are described in further detail in the following subsections below.

Trust mapping is an iterative process, like most data mapping and modeling processes. As computer architectures, solutions, systems, and their components are discovered, classified, and labeled, further understanding and knowledge is gained by the mapper(s) or system architects, i.e., the people that perform the process, that allows them to course-correct on classification, differentiation between layers of abstraction, and which components should be modeled using which structures, terms, and properties. These iterations should be performed in each of these phases to produce the best mappings possible and to optimize purview among first-time audiences.

### Component Classification

As noted above, at 102 of FIG. 1, discovery processes are performed as needed to classify existing components of the computer system, architecture, or software. If a schematic is not provided with sought after technical documentation, a discovery process is used to detect existing component nodes. Some examples of discovery processes include network discovery, enumeration of pre-installed applications and virtual environments for employees from a central network store, data mining, business process discovery, etc.

Examples of network discovery include, for example, Address Resolution Protocol (ARP), Link Layer Discovery Protocol (LLDP), Internet Control Message Protocol (ICMP), Simple Network Management Protocol (SNMP), etc. Business process discovery includes a set of techniques that manually or automatically construct a representation of an organizations' current business processes and their major process variations using, for example, business intelligence, six sigma, process mining, etc. The techniques include, for example, alpha-algorithm, heuristic mining, genetic process mining, region-based mining, inductive mining, etc. The results of the techniques can include, for example, a directly-follows graph, petri nets, Business Process Model and Notation (BPMN), etc.

As discovery is performed, identification and classification can occur, along with annotations of which properties an item has, as shown in FIG. 2A. For example, FIG. 2A illustrates a computer system, architecture, and environment 200 that includes example labeling of initially known and easily conceived components. For example, the components include a developer laptop, that is identified with an associated user, operating system, software, files, etc. The components also include a cloud development environment 206, that is identified with an operating system, software, logs, etc. The components also include a security analyst workstation 208 that is identified with a user, an operating system, software, and files. The components also include a GitHub-Hosted JavaScript Library 210 that is identified with software. The components also include a GitLab CI/CD Pipeline in a temporary virtual machine (VM) that is identified with an operating system, software, logs, etc. The components also include Git Repositories 214 that is identified with an operating system, software, and logs. The components also include a Security Information and Event Management (SIEM) Server 216 that is identified with an operating system, software, logs, etc. The components also include Python dependencies 218 that is identified with software. The components also include a software product 220 that is identified with software. The components also include a Hardware and Software Device Assembly Line that is identified with a user, an operating system, software, and files. The components also include a product website 224 that is identified with a certificate, a domain registration, and network traffic. The components also include an Integration into a Product X that is identified with software. The classification of components encapsulated at 102 of FIG. 1 and illustrated in FIG. 2A may be done with a bottom-up approach, a top-down approach, or a combination of both.

As iterations of the component classification are performed, layers of abstraction will begin to separate, as shown in FIG. 2B, which illustrates the computer system, architecture, and environment 250 with identification of components into loose grouping/clusters after further discovery. In particular, FIG. 2B illustrates a number of groupings of various identified components. For example, grouping 254 includes a home network 254a and developer laptop 204. Grouping 256 includes a cloud 256a, such as Amazon Web Services (AWS) cloud, and cloud developer environment 206. Grouping 258 includes an administrator network 258a, security analyst workstation 208, a security analyst authentication server 258b, and SIEM server 216. Grouping 260 includes the Internet 260a, GitHub-Hosted JavaScript Library 210, Python dependencies 218, and product website 224. Grouping 262 includes a corporate network 262a, GIT Repositories 214, GitLab CI/CD Pipeline in temporary VM 212, logs 262b, software product 220, an Application Programming Interface (API) Software Development Kit (SDK) 262c, and integration into product X 226. Grouping 264 includes a third-party plant 264a and hardware and software device assembly line 222.

These layers may have clear separation or may include items that could be subjectively classified higher or lower - the determination will be up to the mappers but should only be a staged decision until the next phase of mapping trust is completed, as that may reverse the decision. There may be multiple possibilities for an item to be mapped to, and its subcomponents/properties may be either encompassed as part of the item itself or separated into another entity at a higher/lower abstraction, as shown in FIG. 2C. Regardless, the purpose of the component classification and discovery processes phase is to annotate all components present in the entire system, as much as possible, while neglecting as little as possible.

FIG. 2C illustrates an example of splitting Python dependencies 218 into individual libraries and further dependencies. For example, FIG. 2C illustrates GitHub-Hosted JavaScript Library 210, Python dependencies 218, and Product website 224. The Python dependencies 218 are further split into a grouping 286 with a GitHub PyTorch Library 286a, a PyPi Pipenv Library 286b, a PyPi Pandas Library 286c, and a Numpy Library (Pandas Dependency) 286d.

### Map Trust Between Components

After the component classification 102 illustrated in FIG. 1 is performed, the trust mapping between system components is performed at 104. The trust mapping annotates the reason(s), method(s), trustor(s)/trustee(s), lack thereof, and other details involved in the relationships between (sub)components of the computer system, architecture, and software.

FIG. 3A illustrates a trust mapping 300, or model of risk propagation tree, of a GitLab CI/CD Pipeline, such as the GitLab CI/CD Pipeline 212 shown in FIGs. 2A and 2B.

As with the prior classification phase this may be intertwined with understanding the business processes that occur by users/operators of a system, the implementation of the policies enforced by key decision-makers, and the potentially automated processes that occur during development and deployment of software/hardware. As mentioned before, this requires deep knowledge of the interconnected (sub)components of the entire system and may cross various levels of abstraction. Therefore, the process of mapping trust is not to be confused with data transformation processes, as system architects that work closely with business process stewards perform the mapping, rather than developers that do not have domain knowledge. This was also a key motivator in developing the trust mapping process itself, as non-technical information needs representation.

As illustrated in FIG. 3A, after performing the trust mapping process, a trustor/trustee relationship 320 is identified between developer laptop 204 and cloud development environment 206. The corresponding method for the trustor/trustee relationship 320 is identified as remote desktop protocol. In addition, a trustor/trustee relationship 322 is identified between cloud development environment 206 and security analyst workstation 208. The corresponding method for the trustor/trustee relationship 322 is also identified as remote desktop protocol. In addition, a trustor/trustee relationship 324 is identified between cloud development environment 206 and GIT repositories 214. The corresponding method for the trustor/trustee relationship 324 is identified as Secure Sockets Layer (SSL) / Transport Layer Security (TLS). In addition, a trustor/trustee relationship 326 is identified between security analyst workstation 208 and security analyst authentication server 258b. The corresponding method for the trustor/trustee relationship 326 is identified as secure shell (SSH) / multi-factor authentication (MFA). In addition, a trustor/trustee relationship 328 is identified between Git repositories 214 and GitLab CI/CD Pipeline in temporary VM 212. The corresponding method for the trustor/trustee relationship 328 is identified as temporary token. In addition, a trustor/trustee relationship 330 is identified between Git Repositories 214 and security analyst authentication server 258b. The corresponding method for the trustor/trustee relationship 320 is identified as SSL/TLS. In addition, a trustor/trustee relationship 332 is identified between GitHub-Hosted JavaScript Library 210 and Python Dependencies 218 and trustees and the GitLab CI/CD pipeline in Temporary VM 212 as Trustor. The corresponding method for the trustor/trustee relationship 332 is identified as X.509 Certificate.

Mappings of trust between components may have a cardinality of one-to-one, one-to-many, or many-to-many when the relationship between the two components is not verification. In mathematical set theory, the cardinality refers to the number of elements in a set. When the relationship is verification, the cardinality can only be one-to-one, although two of these directional relationships may exist at different times between the components, such as during a protocol handshake where both parties confirm each other.

FIG. 3B illustrates a draft of trust relationships 350 between all components of the computer system, architecture, and environment 250 illustrated in FIG. 2B, with verification relationships illustrated by single or double-headed arrows. Double-headed arrows correspond to mutual verification relationships while single-headed arrows correspond to unilateral verification. When multiple verification steps exist, the entire process may be modeled as a single overall interaction, or left as separate, directed back-and-forth expressions. This will be dictated by use case and the format in which the trust mapping is recorded. For example, the trust mapping can be recorded using, for example, a Resource Description Framework (RDF) / eXtensible Markup Language (XML), or a comma-separated values (CSV) spreadsheet.

The following is one example of mapping steps that may be part of a trust mapping effort using business process mapping, i.e., a technique that visually displays the steps involved in a business process, showing steps from start to finish: 1. Process identification; 2. Information gathering; 3. Process mappings; 4. Analysis; 5. Develop/install new methods; and 6. Manage process.

Note that the manner in which a process is performed may differ based on the format chosen for recording and exporting the trust mapping, in addition to the system architect's preferences of tools and modeling decisions for the use case.

With reference to FIG. 3C, additional Trustor/Trustee relationships and methods are illustrated with verification arrows illustrating mutual verification with double-headed arrows and unilateral verification with single-headed arrows for combinations of different components A and B. For example, component A 382, component B 384, component A 386, and component B 388 are in a trustor/trustee relationship 394 with the method identified as handshake. In addition, component A 390 and component B 392 are in a trustor/trustee relationship 396 with the method identified as the SHA-256 cryptographic hash function and the reason identified as "confirms identity of user."

### Redact And Encapsulate Desired Information

After the mapping of trust between components 104 illustrated in FIG. 1 is performed, the redaction and encapsulation of desired information is performed at 106. Up until this phase as many components and sub-components of the system as possible are included, minimizing the trust relationships that exist between the target system and external systems. This may be done further through revisiting those phases, as shown in FIG. 4A. In particular, the FIG. 4A is similar to FIG. 3B, except that in diagram 400, some components of the system/architecture have been removed, such as GitHub-Hosted JavaScript library 210, Python dependencies 218, product website 224, and Hardware + software device assembly line 364b. In this phase items that have been mapped may be encapsulated (collapsed) into anonymously labeled entities/nodes, as shown in FIG. 4B. For example, in FIG. B, integration into Product X 226 has been redacted as sensitive product information 460b. In addition, the GitLab related components, i.e., GitLab CI/CD Pipeline in temporary VM 212, the Git Repositories 214, and Logs 262b, have been encapsulated as the encapsulated component GitLab 460a. In addition, the security analyst authentication server 258b and SIEM server 216 has been encapsulated as the encapsulated component security servers and sandboxes 458b. The purpose of this step is to provide clarity for human viewing, as too many nodes and annotations can make marketing documentation or initial purview difficult, and to protect proprietary, controlled, or classified information. Nonetheless, the information of the trust mapping still exists hidden from view, so that at any time it may be expanded for detailed explanation to inquiring audiences. Individuals that need to know the inner workings can view the full trust mapping information, while individuals without the need to know can have high confidence that the systemic risk of the system has been analyzed and the results useful for better defense and/or redesign of the system.

### Export

After redaction and encapsulation of information at 106 of FIG. 1, the final trust mapping is exported at 108. Depending on system architect preferences and expert opinion, modeling software may be used during the above mapping and redacting processes. If so, the trust mapping can be exported into a file as the final product. However, the use of software is not mandatory for trust mappings, as visualizations of data stored in files, as shown at 500 of FIG. 5A, spreadsheets, as shown at 550 of FIG. 5B, as well as hand-drawn diagrams may be used to track the entities, properties, and relationships. All such final exports are considered to be trust mappings. The final trust mapping 500 shown in FIG. 5A includes a developer device 504, a security analyst device 506, as well as cloud development environment 206, GitLab 460a, API SDK 262c, software product 220, sensitive product information 460b, and security servers and sandboxes 458a. The final trust mapping 550 shown in FIG. 5B illustrates similar information, including the components, trustor/trustee relationships, and verification methods in a spreadsheet/table format 554.

Exported trust mappings illustrate to technical staff and non-technical customers the trust both explicitly, sometimes appearing in marketing documentation or as a feature of a product, and implicitly, unclear technical documentation that does not reveal inner workings, that exists within an architecture, single solution, or operational system.

### Analysis

After the export of the final trust mapping at 108 of FIG. 1, the trust mapping is analyzed at 110. The overall purpose of producing a trust map is to analyze the systemic risk that is involved between components. Analysis may be performed manually by humans assessing the exported trust mapping, or via tool(s) for an automated, computational assessment. This deeper understanding assists in the management of risk, which can be either prevented, reduced, transferred, or accepted. Examples of such management actions include finding more appropriate solutions and patching the root cause of the risk. All such actions may lead to revising the trust mapping since security is an ongoing process and not an end state. FIG. 6 illustrates a flow chart for the analysis, revising solutions, and patching root cause of risk. For example, at 602, prior trust mapping steps are performed. At 606, the deeper knowledge of systematic risk is analyzed. At 604, steps are taking to prevent risk by patching the root cause of the risk at 610. The flowchart then returns to 602. At 612, risk is reduced by modifying policies or system design to mitigate risk at 620. The flowchart then returns to 602. At 614, risk is transferred by shifting risk to another component or owner at 622. At 608, the risk is accepted and the root cause of the risk is monitored at 618. Note that improved knowledge may include heightened awareness, further questions, or empirical metrics from tools.

### TRUST MAPPING IN A PRIVILEGED ACCESS MANAGER (PAM)

The trust mapping procedure of the present disclosure can be used, in particular, in a Privileged Access Manager (PAM) solution.

PAM systems create a single component that has full administrative access to the rest of the system, which creates a single point of failure that didn't exist before credential centralization. Prior to a, Credential Manager, administrative access was spread throughout the organization with each team having their own processes and controls. Centralizing the processes is positive but the Achilles heel is that the Credential Manager now has access to every other system under administration. This is a much bigger threat and target because it could affect the entire enterprise. The same problem exists with the Access Manager, although to a lesser extent, because - while its controls and code are centralized - the hosts themself are not.

The solution to these problems is separation. Isolated components of the system with provable separation store the escrowed credentials, provide the keys to use those credentials, and verify the runtime environment in which those credentials will be loaded. Actions such as password rotations occur via an Action Manager working in concert with the Credential Manager. The administrator or non-person entity will log in to the Credential Manager, which reaches out to multiple separate NIST 800.63b credential sources. The Null Trust Guard of the present disclosure performs a secondary check on identity. The Session Manager then uses proof from an administrator and NPE credentials to reach out and finally get the credential. This process makes it possible for the Action Manager and Credential Manager to independently verify identity and policy even in the event of a complete compromise of the Enterprise ICAM system and prevents session high jacking attacks.

All encryption processes are authenticated and executed within a trusted runtime environment or sandbox, using key material exclusively known to this environment. This approach effectively prevents or mitigates a range of cryptographic attacks, such as chosen ciphertext and chosen plaintext attacks. Axiom employs only NSA-approved cryptographic primitives, ensuring the highest level of security.

Assuming everything is verified and there is real separation as verified by the sandbox; only then can the credential be used. It is this level of separation that allows Null Trust-backed PAM to provide redundant checks and block erroneous or villainous actions from unauthorized agents, even if that agent controls the ticketing system and/or the policy and workflow engines.

This process creates a second layer of protection. Null Trust is provably modeled during the RMF process to maintain separation. No decisions are made based on information credentials or signatures of a single sub-systems. Rather, decisions are made based on a combination of data from sources shown to have separation, i.e., the workflow engine, audit system, and policy engine.

Guaranteeing the independence of the Credential Manager from the Policy Engine and the Workflow Engine is critical to provide a true level of separation. With the full Trust system, the compromise of any one component of the system or any one individual does not compromise the system as a whole.

### TERMS & CONCEPTS

- Graph
   ∘ Abstract Syntax Tree
   ∘ Directed Acyclic Graph
   ∘ Tree
- Mapping
   o Data mapping = not the same as trust mapping but can help find tangential tech for graphs/visualizations/automatic network node labeling
   o Schema matching
   o Semantic mapper
   o Trust Mapping
- Ontology / Semantic Stuff
   o Formal Language
   o Knowledge Base
   o Source-code generation (automatic programming)
   o Systems architect
- Risk
   ∘ Assessment
      □ Information Security Risk Management
   o Systemic
      □ Cyber-specific systemic risk (not to be confused with systemic risk)
      ∘ What can be found with respect to "systemic risk"
         - CISA definition
         - European Cyber Risk Board
            o Conceptually splits cyber incident into 4 phases: context, shock, amplification, and systemic event
            o Examples: WannaCry (2017), NotPetya (2017), Cosmos Bank
         - World Economic Forum whitepaper (Nov 2022) = Original 2016 version
         - RAND analysis
         - Addressing Systemic Cybersecurity Risk (finance to cyber analysis)
         - UN Office for Disaster Risk Reduction (non-cyber) =
         - Article with "think tank" defines here =
         - IOSCO paper
- Tools
   ∘ Digital Directors Network (DDN) released DiRECTOR
   o ProVerif
   o Keysight VEE
   o Transpiler / Transcompiler

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules) are described using various terms, including "connected," "engaged," "interfaced," and "coupled." Unless explicitly described as being "direct," when a relationship between first and second elements is described in the above disclosure, that relationship encompasses a direct relationship where no other intervening elements are present between the first and second elements, and also an indirect relationship where one or more intervening elements are present (either spatially or functionally) between the first and second elements.

As used herein, the phrase at least one of A, B, and C should be construed to mean a logical (A OR B OR C), using a non-exclusive logical OR. For example, the phrase at least one of A, B, and C should be construed to include any one of: (i) A alone; (ii) B alone; (iii) C alone; (iv) A and B together; (v) A and C together; (vi) B and C together; (vii) A, B, and C together. The phrase at least one of A, B, and C should not be construed to mean "at least one of A, at least one of B, and at least one of C."

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A. The term subset does not necessarily require a proper subset. In other words, a first subset of a first set may be coextensive with (equal to) the first set.

In this application, including the definitions below, the term "module" or the term "controller" may be replaced with the term "circuit." The term "module" may refer to, be part of, or include processor hardware (shared, dedicated, or group) that executes code and memory hardware (shared, dedicated, or group) that stores code executed by the processor hardware.

The module may include one or more interface circuits. In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2016 (also known as the WIFI wireless networking standard) and IEEE Standard 802.3-2015 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

Shared memory hardware encompasses a single memory device that stores some or all code from multiple modules. Group memory hardware encompasses a memory device that, in combination with other memory devices, stores some or all code from one or more modules.

The term memory hardware is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory. Non-limiting examples of a non-transitory computer-readable medium are nonvolatile memory devices (such as a flash memory device, an erasable programmable read-only memory device, or a mask read-only memory device), volatile memory devices (such as a static random access memory device or a dynamic random access memory device), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective C, Swift, Haskell, Go, SQL, R, Lisp, Java^{®}, Fortran, Perl, Pascal, Curl, OCaml, JavaScript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

## Claims

1. A method comprising:
classifying, labeling, and grouping a plurality of components of a computer system;
generating a mapping of trust relationships between a plurality of pairs of components from the plurality of components by designating a first component of each pair as a trustor and a second component of each pair as a trustee and by identifying a method associated with the trust relationship for each pair of components, a trust relationship for at least one pair of components being a verification relationship; and
analyzing security risks of the computer system and performing at least one of the following based on the analysis of the security risks:
patching a root cause of at least one security risk based on the mapping of the trust relationships;
modifying a policy of the computer system to mitigate the at least one security risk;
modifying a design of the computer system to mitigate the at least one security risk;
modifying the computer system to shift the at least one security risk from one component of the computer system to another component of the computer system; and
monitoring a root cause of the at least one security risk.

2. The method of claim 1, further comprising redacting and encapsulating information within the generated mapping of trust relationships prior to exporting the mapping of the trust relationships.

3. The method of claim 1 or claim 2, wherein the computer system includes a privileged access manager.

4. The method of any one of the preceding claims, wherein the computer system includes at least one of a GitLab continuous integration and continuous deployment (CI/CD) pipeline, an application programming interface (API) software development kit (SDK), Git Repositories, and a software product.

5. The method of any one of the preceding claims, wherein the computer system includes at least one of a security analyst workstation, a security analyst authentication server, and a security information and event management (SIEM) server.

6. The method of any one of the preceding claims, wherein the computer system includes at least one of a developer computer and a cloud development environment.

7. The method of any one of the preceding claims, wherein the computer system includes at least one of a GitHub-Hosted JavaScript Library, Python dependencies, and a product website.

8. The method of any one of the preceding claims, wherein the method associated with the trust relationship for each pair of components includes one of: a remote desktop protocol method, a secure sockets layer (SSL) / transport layer security (TLS) method, a secure shell (SSH) / multi-factor authentication (MFA) method, a temporary token method, a X.509 certificate method, a handshake method, and an SHA-256 hash method.

9. The method of any one of the preceding claims, wherein the mapping of the trust relationships is generated as a visualization of components stored in at least one computer file.

10. The method of any one of the preceding claims, wherein the mapping of the trust relationships is generated as a spreadsheet.

11. The method of any one of the preceding claims, further comprising exporting the mapping of the trust relationships to a user.
